# EUROPEAN PATENT SPECIFICATION

(11) **EP 0 789 672 B1**
(45) Date of publication and mention of the grant of the patent: **04.04.2001**
(21) Application number: 96901179.0
(22) Date of filing: 19.01.1996
(51) Int. Cl.: C02F 1/24, B01F 3/04, B03D 1/24

(54) **METHOD AND APPARATUS FOR PRODUCING AIR SATURATED WATER**
VERFAHREN UND GERÄT ZUR HERSTELLUNG VON MIT LUFT GESÄTTIGTEM WASSER
PROCEDE ET APPAREIL POUR LA PRODUCTION D'EAU SATUREE D'AIR

(30) Priority: 19.01.1995 SE 9500215
(43) Date of publication of application: 20.08.1997
(73) Proprietor: Eriksson, Hans, 762 93 Rimbo (SE); Isaksson, Kent, 761 94 Norrtälje (SE)
(72) Inventor: Eriksson, Hans, 762 93 Rimbo (SE); Isaksson, Kent, 761 94 Norrtälje (SE)
(74) Representative: Johansson, Lars
(86) International application number: PCT/SE96/00050
(87) International publication number: WO 96/22250

(56) References cited:
- GB-A- 2 190 853
- SE-B- 404 177

## Description

### TECHNICAL FIELD

The present invention refers to a method and an apparatus for producing water saturated with air under high pressure and preferably intended for dispersion in flotation plants, which apparatus comprises a preferably standing cylindrical pressure vessel which during operation to a controlled level is partly filled with pressurized water flowing through said vessel and out through a bottom outlet and partly with continuously added compressed air, whereby during the passage of the water through the vessel air is dissolved in the water.

### PRIOR ART

When treating water, drinking water as well as sewage water, flotation plants are used to an increasing extent in order to increase the rate of flow of the water through the treatment plants and as a consequence of this also making it possible to decrease the size of the necessary basins and thereby the size of the complete treatment plants. When it comes to drinking water the requirements on -the finished product are mainly uniform and the design of a treatment plant is mainly decided by the character of the source of water supply. If the source is a lake or a water course usually separation of larger particles is taking place in a filter chamber whereafter the water is subjected to a chemical and biological treatment carried out by means of the addition of precipitation- and flocculation- agents in a flocculation chamber. The particles which are precipitated are then to be separated from the water which can be done by means of sedimentation which means that the particles through the influence from gravity sink to the bottom in a sedimentation basin. Different types of particles have different density and therefore different sinking velocity. In order to make it possible for particles having low density, "light particles", to sediment while the water passes a sedimentation basin a long time is required which means that the surface of the sedimentation basin must be large.

The time for the particle separation could be considerably reduced by means of flotation which means that microscopic air bubbles are added to the water which adhere to particles or particle flocculations in the water and also contribute in the process of creating particle flocculations and keeping them together. Air bubbles raise fast towards the water surface bringing adhered particles and particle flocculations to the water surface where they create a stable sludge cover which can be removed by means of scrapers or by intermittently raising the water level in the flotation basin so that the sludge cover transfers to a sludge channel arranged at one of the edges of the basin.

The microscopic air bubbles which are used in the flotation procedure have a diameter of 30-80 micrometer and can not be generated for instance by means of the injection of air directly in the water. Microscopic air bubbles for flotation of drinking water are usually generated by means of dissolving air in clean water in a pressured vessel under overpressure whereby the biggest possible saturation level is aimed at. This water which usually is called dispersion water is fed with maintained high pressure to the inlet for the flocculated water in the flotation basin positioned at its bottom where it is added to said water via special nozzles or sprayers which are designed to give an instantaneous decrease in the pressure at which the air dissolved in the water is released in the form of microscopic bubbles creating a dispersion of air in the water.

The pressure vessels which are used for the generation of high pressure dispersion water, saturated with air to the greatest possible extent, are usually kept half filled with water by means of a control unit including sensors and the in- and outlets for the water are positioned below the water surface in the pressured vessel. The addition of compressed air takes place in the space filled with air above the water surface and the vessel is rather big in order to make the contact surface between air and water large. In another known embodiment the pressure vessel which often is as tall as a man has a reduced diameter and the consequently reduced contact surface between the water and air has been compensated by the feeding of the water through a nozzle arranged in the side wall of the vessel in the air filled space through which nozzle the water is spraying against the opposite wall of the vessel where the water jet to some extent is splitted up.

The flotation method has considerably decreased the time for water treatment and the decreased time of flow means that water treatment plants could be made smaller keeping the same capacity. When the space requirement of the treatment plants decreases new application fields are opened. Such a development requires that all the devices are made smaller and if possible are given improved characteristics. This also goes for the apparatus for producing dispersion water in which already treated, recirculated, water is used. An increase of the saturation level in the dispersion water decreases the need of recirculated water whereby the efficiency of the whole treatment plant is improved.

### DESCRIPTION OF THE INVENTION

One object of the present invention is to propose a method and an apparatus for producing dispersion water having a high degree of air saturation. Another object is to propose an apparatus which combines high capacity with small dimensions. This is attained by means of an apparatus having the characteristics according to the appended claims.

### DESCRIPTION OF THE DRAWINGS

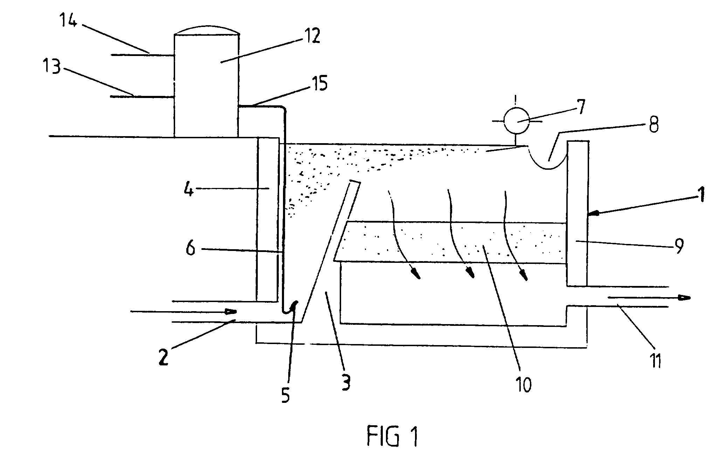

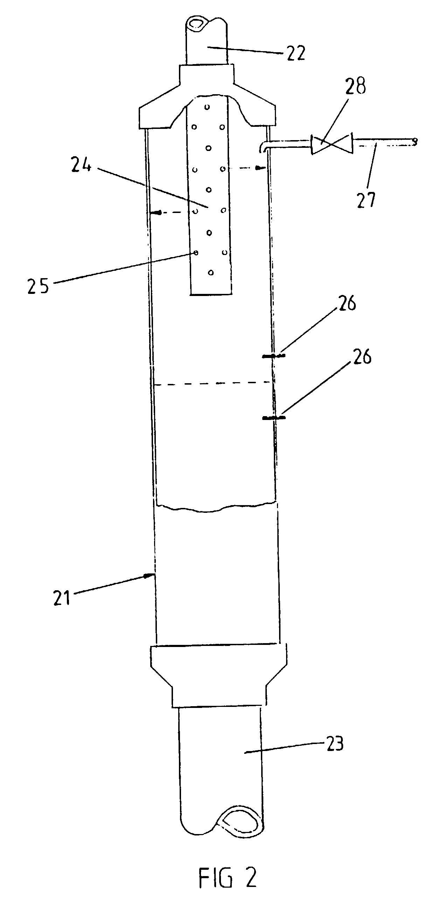

One embodiment of the invention will be described more in detail with reference to the enclosed drawing on which figure 1 in a side view and schematically shows a conventionally equipped flotation basin in section and figure 2 shows partly in section an apparatus according to the invention for producing dispersion water.

In figure 1 which schematically and in a side view shows a conventionally equipped flotation basin in section the basin is generally designated 1. The basin has an inlet 2 to which water is fed from a flocculation chamber, not shown. By means of an inclined barrier 3 arranged in front of the inlet 2 in the basin 1 the water is caused to flow upwards in the basin 1. At the bottom of the pocket which is created between the wall 4 of the basin and the barrier 3 a set of tubes provided with nozzles or sprayers debouch, one tube 6 of which is shown in the figure. The tubes 6 feed air saturated water, dispersion water, to the flocculated water fed to the basin through the inlet 2 which water is given an increased movement by the dispersion water injected under pressure. The nozzles or sprayers 5 are so designed that the dispersion water is subjected to an instantaneous pressure decrease which releases the air in that water in the form of microscopic bubbles which in their movement towards the water surface adhere particles and particle flocculations and relatively fast carry most of these particles to the water surface where a sludge cover is created which by means of some kind of sludge scraper 7 or in another way is transferred to the sludge channel 8 at the wall 9 of the basin. Heavy particles which the Micro bubbles are not able to lift are collected by the filter 10 which is arranged between the back side of the barrier 3 and the wall 9 of the basin and through which filter the treated water passes on its way via the outlet 11 to a clear water basin, not shown. From this basin part of the treated water is pumped, under high pressure, to the water inlet 13 of the pressure vessel 12. The vessel 12 in which the dispersion water is produced is provided with compressed air via the air inlet 14 from a compressor, not shown, and the air saturated water is fed back via the outlet 15 and its branchings 6 to the nozzles 5 arranged in the flotation basin 1.

In figure 2 an apparatus according to the invention is shown, schematically and partly in section, for producing dispersion water. The apparatus comprises a vertical pressure vessel 21 which is implemented by means of commercially available tube parts and has the form of an enlargement on a conduit 22, 23. The inlet tube 22 debouch into a spray-nozzle 24 which has the form of a prolongation of the inlet tube 22, closed at its free end. The envelope surface of the prolongation tube 24 is completely perforated by means of small spray holes 25 only a smaller number of which are shown in figure 2. During operation the pressure vessel 21 is halfway filled with water and two detectors arranged in the wall of the vessel deliver signals to a control unit, not shown, which if necessary decreases or increases the water flow into the vessel alternatively adjusts the air pressure in the pressured vessel 21. The feeding of compressed air is carried out via the conduit 27 and is controlled by means of a magnet valve 28 arranged on said conduit. During operation water is spraying, as indicated in figure 2 with a couple of dashed arrows, from the spray-nozzle 24 against the inner wall of the pressured vessel which will be covered by a curtain of water which continuously is provided with new water whereby the air absorbing ability of the curtain all the time is kept at the maximum level.

Due to the considerable improvement in the air absorbing ability of the apparatus according to the invention compared to known apparatuses it has been possible to reduce its dimensions to a great extent. Thus, a conventional apparatus having a height of close to 2 meters and a diameter of 35 cm has been possible to replace with an apparatus having a height of approximately 1 meter and a diameter of 10 cm.

Due to this reduction of the dimensions conventional, specially made pressure vessels have for certain purposes been possible to replace with a 4" tube having reduction couplings as end portions and e.g. an inlet conduit of 1" and an outlet conduit of 2".

## Claims

1. Method for producing water saturated with air comprising the steps of feeding water to be saturated with air through a conduit (22) to an inlet at the upper part of a preferably standing cylindrical pressure vessel (21) provided with a top cover and a bottom cover which vessel during operation is filled to a controlled level with pressurized water flowing through said vessel from the inlet to an outlet in the lower part of the vessel, feeding air under pressure to said vessel, whereby during the transport of the water through the vessel (21) from the inlet to the outlet air is dissolved in the water, **characterised in that** the method further comprises the following steps: the incoming water flow is split by means of a spray-nozzle (24) into multiple jets at least part of which jets are directed essentially perpendicular to the inner walls of the vessel (21), which jets create multiple impact points for said jets at least at the cylindrical inner wall of said vessel, the multiple impacts creating a water curtain essentially covering the complete cylindrical inner wall of said vessel in the volume above said controlled level.

2. Method according to claim 1, **characterised in that** part of the multiple jets are directed towards the inner surface of said top cover.

3. Apparatus for carrying out the method according to claim 1 comprising a preferably standing cylindrical pressure vessel (21) provided with a top cover and a bottom cover which vessel during operation is filled to a controlled level with pressurized water flowing through said vessel from an inlet at the upper part of said vessel to an outlet in the lower part of the vessel, an inlet arranged on said vessel for air under pressure whereby during the transport of the water through the vessel (21) air is dissolved in the water, **characterised in that** said inlet for water to be saturated with air on the inside of the vessel is connected to a spray-nozzle (24) which splits the incoming water flow into multiple jets at least part of which jets are directed essentially perpendicular to the inner walls of the vessel (21) so that said part of the jets create multiple impact points for said jets at least at the cylindrical inner wall of said vessel and said jets create a water curtain essentially covering the complete cylindrical inner wall of said vessel in the volume above said controlled level.

4. Apparatus according to claim 3, **characterised in that** said inlet for water to be saturated is arranged in the top cover of said vessel and said spray-nozzle (24) connected to the inlet is arranged co-axially with the vessel.

5. Apparatus according to claim 3 or 4, **characterised in that** said spray-nozzle (24) is arranged to spray also the inside of said top cover.

6. Apparatus according to any of the claims 3 to 5, **characterised in that** said outlet for saturated water is arranged in said bottom cover.

## Patentansprüche

1. Verfahren zur Herstellung von mit Luft gesättigtem Wasser, umfassend die Schritte
des zuführens des Wassers, das mit Luft saturiert werden soll, durch eine Zuführung (22) zu einem Einlass am oberen Teil eines vorzugsweise stehenden zylindrischen Druckgefäßes (21), das mit einer oberen Abdeckung und einer unteren Abdeckung versehen ist, wobei das Gefäß während des Betriebs auf ein geregeltes Niveau mit unter Druck gesetztem Wasser gefüllt wird, das durch das Gefäß vom Einlass zu einem Auslass im unteren Teil des Gefäßes strömt,
des Zuführens von Luft unter Druck zu dem Gefäß, wodurch während des Transports des Wassers durch das Gefäß (21) vom Einlass zum Auslass Luft in dem Wasser gelöst wird,
**dadurch gekennzeichnet**, dass das Verfahren weiter die folgenden Schritte umfasst: die eingehende Wasserströmung wird durch eine Sprühdüse (24) in eine Vielzahl von Jetströme geteilt, von denen mindestens ein Teil im wesentlichen senkrecht zu den inneren Wänden des Gefäßes (21) gerichtet ist, wobei die Jetströme eine Vielzahl von Auftreffpunkten für die Jetströme zumindest an der zylindrischen inneren Wand des Gefäßes erzeugen, die Vielzahl von Auftreffstößen einen Wasservorhang erzeugt, der im wesentlichen die vollständige zylindrische innere Wand des Gefäßes in dem Volumen oberhalb des geregelten Niveaus bedeckt.

2. Verfahren nach Anspruch 1, **dadurch gekennzeichnet, dass** ein Teil der mehreren Jetströme in Richtung auf die innere Oberfläche der oberen Abdeckung gerichtet ist.

3. Vorrichtung zum Durchführen des Verfahrens nach Anspruch 1, umfassend ein vorzugsweise stehendes zylindrisches Druckgefäß (21), das mit einer oberen Abdeckung und einer unteren Abdeckung versehen ist, wobei das Gefäß während des Betriebs auf ein geregeltes Niveau mit unter Druck gesetztem Wasser gefüllt wird, das durch das Gefäß von einem Einlaß am oberen Teil des Gefäßes zu einem Auslass im unteren Teil des Gefäßes strömt, ein Einlass auf dem Gefäß für Luft unter Druck angeordnet ist, wobei während des Transports des Wassers durch das Gefäß (21) Luft in dem Wasser gelöst wird, **dadurch gekennzeichnet, dass** der Einlass für Wasser, das mit Luft saturiert werden soll, auf der Innenseite des Gefäßes mit einer Sprühdüse (24) verbunden ist, die die eingehende Wasserströmung in eine Vielzahl von Jetströmen teilt, wobei mindestens ein Teil der Jetströme im wesentlichen senkrecht zu den inneren Wänden des Gefäßes (21) gerichtet ist, so dass der Teil der Jetströme eine Vielzahl von Auftreffpunkten für die Jetströme an mindestens der zylindrischen inneren Wand des Gefäßes erzeugt und die Jetströme einen Wasservorhang erzeugen, der im wesentlichen die vollständige zylindrische innere Wand des Gefäßes in dem Volumen oberhalb des geregelten Niveaus bedeckt.

4. Vorrichtung nach Anspruch 3, **dadurch gekennzeichnet, dass** der Einlass für Wasser, das saturiert werden soll, in der oberen Abdeckung des Gefäßes angeordnet ist, und die Sprühdüse (24), die mit dem Einlass verbunden ist, koaxial mit dem Gefäß angeordnet ist.

5. Vorrichtung nach Anspruch 3 oder 4, **dadurch gekennzeichnet, dass** die Sprühdüse (24) angeordnet ist, dass sie auch die Innenseite der oberen Abdeckung besprüht.

6. Vorrichtung nach einem der Ansprüche 3 bis 5, **dadurch gekennzeichnet, dass** der Auslass für saturiertes Wasser in der Bodenabdeckung angeordnet ist.

## Revendications

1. Procédé de production d'eau saturée d'air, comprenant les étapes consistant à amener de l'eau devant être saturée d'air par un conduit (22) à une entrée située dans la partie supérieure d'un récipient pressurisé (21) se tenant de préférence debout et muni d'un couvercle supérieur ainsi que d'un couvercle inférieur, ce récipient, pendant le fonctionnement, étant rempli à un niveau contrôlé par de l'eau pressurisée s'écoulant à travers le récipient de l'entrée vers une sortie située à la partie inférieure de ce récipient, et à amener de l'air sous pression au récipient, de façon que de l'air soit dissout dans l'eau pendant le transport de l'eau à travers le récipient (21) de l'entrée vers la sortie de celui-ci,
caractérisé en ce que
le procédé comprend en outre les étapes suivantes :
• le débit d'eau qui arrive est divisé, au moyen d'une buse de pulvérisation (24), en jets multiples,
• une partie au moins de ces jets sont dirigés essentiellement perpendiculairement aux parois intérieures du récipient (21),
• ces jets créent des points d'impact multiples des jets, au moins sur la paroi intérieure cylindrique du récipient, et
• les impacts multiples forment un rideau d'eau couvrant essentiellement toute la paroi intérieure cylindrique du récipient dans le volume situé au-dessus du niveau contrôlé.

2. Procédé selon la revendication 1,
caractérisé en ce qu'
une partie des jets multiples sont dirigés vers la surface intérieure du couvercle supérieur.

3. Appareil pour la mise en oeuvre du procédé selon la revendication 1, comprenant de préférence un récipient pressurisé cylindrique (21) se tenant de préférence debout et muni d'un couvercle supérieur ainsi que d'un couvercle inférieur, ce récipient, pendant le fonctionnement, étant rempli jusqu'à un niveau contrôlé par de l'eau pressurisée s'écoulant à travers le récipient depuis une entrée située à la partie supérieure du récipient, jusqu'à une sortie située dans la partie inférieure du récipient, une entrée étant disposée sur le récipient pour recevoir de l'air sous pression de façon que, pendant le transport de l'eau à travers le récipient (21), de l'air soit dissout dans l'eau,
caractérisé en ce que
l'entrée de l'eau devant être saturée par de l'air sur l'intérieur du récipient, est reliée à une buse de pulvérisation (24) qui divise le débit d'eau incident en jets multiples, une partie au moins de ces jets étant dirigés essentiellement perpendiculairement aux parois intérieures du récipient (21) de façon que cette partie des jets forme des points d'impact des jets au moins sur la paroi intérieure cylindrique du récipient, et que les jets forment un rideau d'eau couvrant essentiellement toute la paroi intérieure cylindrique du récipient dans le volume situé au-dessus du niveau contrôlé.

4. Appareil selon la revendication 3,
caractérisé en ce que
l'entrée de l'eau devant être saturée d'air est disposée dans le couvercle supérieur du récipient, et la buse de pulvérisation (24) reliée à l'entrée est disposée coaxialement avec le récipient.

5. Appareil selon la revendication 3 ou 4,
caractérisé en ce que
la buse de pulvérisation (24) est disposée pour effectuer également une pulvérisation sur l'intérieur du couvercle supérieur.

6. Appareil selon l'une quelconque des revendications 3 à 5,
caractérisé en ce que
la sortie de l'eau saturée est disposée dans le couvercle inférieur.
